# EUROPEAN PATENT APPLICATION

(11) **EP 1 710 013 A1**
(43) Date of publication of application: **11.10.2006**
(21) Application number: 05007744.5
(22) Date of filing: 08.04.2005
(51) Int. Cl.: B01J 19/18, B01J 19/24, C07C 2/08, C07C 11/02

(54) **A process for the preparation of linear alpha-olefin oligomers**

(71) Applicant: Saudi Basic Industries Corporation, Riyadh 11422 (SA); Linde AG, 65189 Wiesbaden (DE)
(72) Inventor: Tarek, Mohamed Moustafa c/o Saudi Basic Industries, Riyadh 11551 (SA); Fuad, Moussa c/o Saudi Basic Industries, Riyadh 11551 (SA)
(74) Representative: Winkler, Andreas Fritz Ernst

(57) **Abstract**

Process for the preparation of linear α-olefin oligomers comprising the following steps:
a) providing at least one cascade of reaction vessels which comprises at least two reaction vessels connected in series,
b) adding at least one solvent, at least one, in particular homogeneous, catalyst, if need be at least one, in particular homogeneous, co-catalyst, and ethylene to an initial, first reaction vessel,
c) conducting an oligomerization reaction in the first reaction vessel for a first period of time sufficient to start α-olefin formation,
d) transferring at least a part, in particular all, of the content of the first reaction vessel to a subsequent, second reaction vessel in the cascade, in particular by use of a first pipe system, in which ethylene is already present and/or to which ethylene is simultaneously and/or subsequently added,
e) conducting the oligomerization reaction in the second reaction vessel for a second period of time sufficient to continue α-olefin formation,
f) transferring at least a part, in particular all, of the content of the second reaction vessel to a last, third reaction vessel in the cascade, in particular via a third pipe system, in which ethylene is already present and/or to which ethylene is simultaneously and/or subsequently added,
g) conducting the oligomerization reaction in the third reaction vessel for a third period of time sufficient to continue and terminate α-olefin formation, and
h) isolating linear α-olefin oligomers from the third reaction vessel.

## Description

The present invention relates to a process for the preparation of linear α-olefin oligomers.

Ethylene polymerization reactions are well known in the art, and can be conducted by use of homogeneous or heterogeneous catalyst systems. In the production of ethylene polymers different methods such as gas phase polymerization, solution polymerization or suspension polymerization can be employed. For example, according to EP 1 040 868A2 ethylene/α-olefin copolymers can be obtained by a multistage gas phase polymerization in a fluid bed reactor.

Usually, when ethylene oligomers are to be produced the same methods are employed as with the preparation of ethylene polymers, the reaction is just terminated at an earlier stage or the catalyst activity is moderated. However, as ethylene polymerization is of exothermic nature, and, therefore, is not easy to control, especially with large-scale productions, the resulting polymer or oligomer is generally not well defined in terms of chain length and/or degree of branching.

Much effort has been spent in designing transition metal catalysts which allow for the preparation of rather specific polymer products. For example, as can be derived from DE 694 09 530 T2 a linear ethylene polymer which only comprises about 0.01 to 3 long-chain branching residues along each 1000 carbon atoms of the polymer backbone is obtained by use of catalysts having a strained geometry.

EP 1 041 088 A1 teaches to prepare an ethylene/α-olefin copolymer in the gas phase by use of a transition metal based catalyst system in two fluidized bed reactors which are connected in series. With this method it is possible to prepare an in situ blend of a polypropylene copolymer and an other polyolefin.

According to DE 240 03 542 A1 by using two reaction vessels, which are connected in series, for the preparation of a polypropylene copolymer, and by blending said copolymer with an other polyolefin a variety of different blends should be easily obtained with as little equipment as necessary.

However, it is still difficult to produce linear α-olefin oligomers by way of known polymerization protocols in a predictable manner, especially in large scale production. Usually, the oligomerization being exothermic the reaction conditions are not systematically and easily to control furnishing besides linear α-olefin oligomers also polymeric side products as well as branched oligomers. These polymers or branched oligomers may not always be soluble in the reaction medium at the prevailing operating conditions, and might, thus, lead to reactor fouling and/or to blockage the downstream equipment of the reactors employed.

The method for the preparation of linear α-olefin oligomers as described in DE 43 38 414 Cl relies on the use of a homogeneous zirconium catalyst and an organometalic co-catalyst in an organic solvent. For DE 43 38 414 C1 it is essential to conduct the oligomerization reaction at a pressure in the range from 31 to 50 bar in a ductwork reactor into the bottom part of which ethylene is to be introduced. As soon as the content is removed from the reaction vessel it has to be quenched by addition of water or alcohols in order to prevent undesired side reactions.

It has been an object of the present invention to provide a method for the preparation of linear α-olefin oligomers which is void of any of the aforementioned disadvantages and which allows for a controlled large scale production furnishing oligomers essentially without being contaminated with polymeric and/or branched side products. It has been a further object of the present invention to provide a method for the preparation of linear α-oligomers which allows reducing overall plant costs in particular in terms of maintenance and shut down time, and improving the reactor space time yield and the catalyst productivity.

This object has been solved by a method which comprises the following steps:
a) providing at least one cascade of reaction vessels which comprises at least two reaction vessels connected in series,
b) adding at least one solvent, at least one, in particular homogeneous, catalyst, if need be at least one, in particular homogeneous, co-catalyst, and ethylene to an initial, first reaction vessel,
c) conducting an oligomerization reaction in the first reaction vessel for a first period of time sufficient to start α-olefin oligomer formation,
d) transferring at least a part, in particular all, of the content of the first reaction vessel to a subsequent, second reaction vessel in the cascade, in particular by use of a first pipe system, in which ethylene is already present and/or to which ethylene is simultaneously and/or subsequently added,
e) conducting the oligomerization reaction in the second reaction vessel for a second period of time sufficient to continue α-olefin oligomer formation,
f) transferring at least a part, in particular all, of the content of the second reaction vessel to a last, third reaction vessel in the cascade, in particular via a third pipe system, in which ethylene is already present and/or to which ethylene is simultaneously and/or subsequently added,
g) conducting the oligomerization reaction in the third reaction vessel for a third period of time sufficient to continue and terminate α-olefin oligomer formation, and
h) isolating linear α-olefin oligomers from the third reaction vessel.

Linear α-olefin oligomers which can be obtained with the process of the present invention in general comprise compounds having a molecular weight M_{w} in the range from 10² to 10⁴ g/mol. For example, by adjusting the reaction time, the catalyst system and/or the number of reaction vessels in the cascade specific classes of oligomers can be synthesized in a tailored manner, such as α-olefin oligomers having 4 to 10, 20 to 30 or 30 to 40 carbon atoms in the linear chain. Of course, also oligomers of 4 to 50 carbon atoms can be obtained. A linear α-olefin oligomer in the meaning of the present invention comprises products having a high degree of linearity, so that at least 90 mol % of the olefins obtained are linear α-olefins, in particular having a number molecular weight greater than about 200 g/mol.

A suitable catalyst system comprises in general at least one catalyst and at least one co-catalyst. Such suitable catalyst systems are generally known in the art. Therefore, the process of the present invention can be run with any transition metal based catalyst system with which the oligomerization of ethylene can be achieved.

For example, a suitable catalyst is obtained by reacting a reducible transition metal halide of Group IVB to VIB or VIII with an aluminum alkyl compound. However, it has been found that compounds such as VCl₄ and FeCl₃ are unsuitable for the preparation of linear α-oligomers.

Preferably, the catalyst used with the method of the present invention is soluble in the reaction mixture, i.e. is a homogeneous catalyst.

Usually, halides, alkoxides or carboxylate derivatives of tetravalent zirconium or hafnium having the formulas MX"ᵣ(OR")₄₋ᵣ and MX"ᵣ(OOCR")₄₋ᵣ where M is Zr or Hf, X" is Cl or Br, n is 0 to 4 and R" is an alkyl, aryl, aralkyl or cycloalkyl group, furnish suitable catalysts. With the aforementioned catalyst preferably an excess of aluminium alkyl halides, in particular aluminum alkyl chlorides, such as R"₂AlX wherein R" is an alkyl group having about 1 to 20 carbon atoms and X is Cl or Br, is used.

Suitable catalysts in particular comprise zirconium compounds such as zirconium halides. zirconium halides which can be used as a catalyst with the present process are represented by the following formula (I) ZrXₐY₄₋ₐ, wherein X and Y, which maybe the same or different, each represents Cl, Br or I and wherein a is 0 or an integer of up to 4. Specific examples of preferred zirconium halides according to formula (I) comprise ZrCl₄, ZrBr₄, ZrI₄, ZrBrCr₃ and ZrBr₂Cl, ZrCl₄ being particularly preferred.

As a co-catalyst to be used with the aforementioned zirconium halides organoaluminum compounds such as alkyl aluminum sesquihalides according to the following formula (II) AlR_{1.5}Q_{1.5}, wherein R represents an alkyl group having from 1 to 20 carbon atoms and Q represents Cl, Br or I, are preferred. Alternatively, also an alkyl aluminum compound having the following formula (III) AlR_{b}Q_{3-b} can be used.

Particularly preferred alkyl aluminum co-catalyst comprise Al₂(CH₃)₃Cl₃, Al₂(CH₃)₃Br₃, Al₂(C₂H₅)₃Cl₃, Al₂(C₂H₆)₃Br₃, Al₂(C₂H₅)₃I₃, Al₂(C₂H₆)₃BrCl₂, Al₂(C₃H₇)₃Cl₃, Al₂(iso-C₃H₇)₃Cl₃, Al₂(C₄H₃)₃Cl₃, Al₂(iso-C₄H₉)₃Cl₃. As alkyl aluminum compounds represented by formula (III) Al₃(CH₃)₃, Al(C₂H₅)₃, Al(C₃H₇)₀, Al(iso-C₃H₇), Al-(C₄H₀)₃, Al(iso-C₄H₉)₃, Al(C₆H₁₁)₃, Al(C₆H₁₃)₃, Al(C₈H₁₇)₃, Al(C₂H₅)₂Cl, Al(C₂H₅)₂Br, Al(C₂H₅)₂I are particularly preferred.

In another embodiment also mixtures of the above co-catalysts can be used.

Most suitably, with the aforementioned catalyst system comprising a zirconium halide and an alkyl aluminum compound also Lewis bases such as thioethers, alkyldisulfates, thiophenes, thiourea sulfates, phosphines and primary amines are used. Such ternary catalyst systems are, for example, described in US 4,783,573.

In another embodiment, the catalyst system represents a homogeneous two-component system which comprises the catalyst as of first component being an adduct of ZR'ClₛBrₜ where s+t=4 and s or t may be 0, 1, 2, 3 or 4, with the organic compound R being selected from the group consisting of esters, ketones, ethers, amines, nitriles, anhydrides, acid chlorides, amides or aldehydes, and a co-catalyst as the second component being an alkyl metal catalyst selected from the group consisting of R₂AlX, RAlX₂, R₃Al₂X₃, R₃Al and R₂Zn wherein R is C₁-C₂₀ alkyl and X is Cl or Br.

Preferably, the catalyst is obtained from a zirconium tetra-halide, in particular ZR'Cl₄, being reacted with esters of the general formula R₁COOR₂ where R₁ and R₂ may be alkyl, aryl, alkaryl or aralkyl groups having a total of 1 to 30 carbon atoms and R₁ may also be hydrogen. Particular preferred is a zirconium catalyst having the following formula (ZrCl₄·CH₃COOR₁)₂ where R₁ is a C₆ to C₁₆ alkyl or a mixture of C₆ to C₁₆ alkyls. The aforementioned catalyst systems can for example be derived from the disclosure of US 4,855,525.

According to a preferred embodiment, the catalyst system comprises a zirconium compound represented by the following formula ZrClₘ(carboxylate)ₙ wherein m + n = 4 and m = 0 to 2, and wherein the carboxylate residue is derived from a C₄-C₈ fatty acid. The co-catalyst to be used with the aforementioned catalyst is an aluminum organic compound having preferably at least one ethyl ligand such as Al(C₂H₅)₃, Al₂Cl₃(C₂H₅)₃ or AlCl(C₂H₅)₂. Details of the aforementioned preferred catalyst system are disclosed in DE 43 38 414 C1.

Another suitable catalyst system relies on the use of a catalyst being represented by the formula ZrCl₍₂₋ₖ₎L₂₊ₖ₎ with 1.4 ≥ k ≥ 1.7, wherein L is OCOR or OSO₃R, R being alkyl, alkylene or phenyl. Suitable ligands comprise fatty acids having 4 to 8 carbon atoms or sulfonic acids. As suitable co-catalysts organic aluminum compounds as described above can be employed with the aforementioned catalyst. With the aforementioned catalyst it is not necessary to use an excess of fatty acids for the oligomerization of ethylene.

In a most preferred embodiment the catalyst system comprises at least 4 components, namely a zirconium component, a mixture of two aluminum compounds and a Lewis base. Such a preferred catalyst system is described in DE 198 12 066 A1. Suitable zirconium compounds comprise zirconium carboxylates represented by the following formula (R'"COO)_{z}ZrCl_{4-z}, wherein R''' represents an unsaturated or aromatic organic residue having a double or triple bond or an aromatic fragment in conjugation with a CO₂ group and wherein z is defined as 1 ≥ z ≥ 4. Particularly preferred residues R''' comprise vinyl, 2-propenyl, acetylenyl, phenyl, naphthyl, cyclopentadienyl, indenyl or fluorenyl. A preferred binary mixture of aluminum compounds is based on a mixture derived from (C₂H₅)ᵢAlCl₃₋ᵢ, wherein i is defined as 1 ≥ i ≥ 2 with an alkyl alumoxane chloride of the following formula

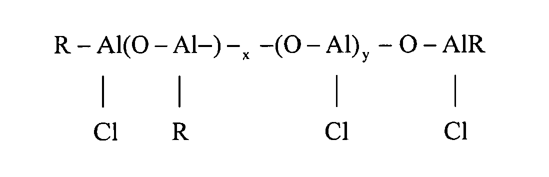

In the latter aluminum compound R preferably represents methyl, ethyl, propyl, butyl, isobutyl and wherein x and y are defined as 0 ≥ x ≥ 10, 0 ≥ y ≥ 10.

As a preferred Lewis base nitroxyl radicals such as 2,2-,6,6-tetramethylpiperadine-1-oxyle (TEMPO) or di-tert-butyl nitroxyl can be employed.

In addition, transition metal catalysts having a strained geometry such as for example disclosed in US 5,026,798 can be used. Particularly preferred compounds comprise (tert-butylamido)(tetramethyl-η⁵-cyclopentadienyl)-1,2-ethanediylzirconium-dichloride, (tert-butyl-amido)-(tetramethyl-η⁵-cyclopentadienyl)-1,2-ethanediyltitanium-dichloride, (methylamido)(tetramethyl-η⁵-cyclopentadienyl)-1,2-ethanediylzirconiumdichloride, (methylamido)(tetramethyl-η⁵-cyclopentadienyl)-1,2-ethanediyltitanium-dichloride, (ethylamido)(tetramethyl-η⁵-cyclopentadienyl)-methylenetitanium-dichloride, (tert-butylamido)dibenzyl(tetramethyl-η⁵-cyclopentadienyl)silanzirconium-dibenzyl, (benzylamido)dimethyl-(tetramethyl-η⁵-cyclopentadienyl)silantitanium-dichloride, (phenylphosphido)-dimethyl(tetramethyl-η⁵-cyclopentadienyl)silantitanium-dimethyl and the like.

With the process of the present invention also the method for oligomer formation according to the so-called Shell Higher Olefin Process (SHOP) can be employed. Suitable SHOP catalysts comprise neutral Ni(II) complexes that bear phosphorus/oxygen-chelating bidentate monoanionic ligands. Exemplary SHOP catalysts which can also be employed with the method of the present invention are, among others, described in US 4,472,522, US 4,472,525, W. Keim et al., Organometallics, 1986, 5, 2356-9, and J. Pietsch et al., New J. Chem. 1998, 467.

Additionally, cationic Ni(II) and Pd(II) α-diimine complexes are effective in ethylene oligomerization as for example disclosed in Brookhart et al., J. Am. Chem. Soc., 1996, 118, 267 to 268 (s.a. M. Peuckert and W. Keim, Organometallics 1983, 2, 594 to 597).

Such catalysts are typically prepared by reacting a suitable bidentate ligand either with an olefinic nickel compound such as bis(cyclooctadiene) Ni(0) or a π-allyl Ni compound, or more preferably, with a simple divalent nickel salt and a reducing agent, e.g., boron hydride, in the presence of ethylene and in a suitable polar organic solvent. Preparation and use of such suitable catalysts are, for example, described in US 3,647,415 and US 3,737,475.

Preferred bidentate chelating ligands for such catalysts are known to include those having a tertiary organophosphorus moiety with a suitable functional group substituted on a carbon atom attached directly to or separated by no more than two carbon atoms from the phosphorus atom of the organo phosphorus moiety. Representative ligends of this type are the compounds (cyclohexyl)₂PCH₂CH₂CO₂M, 1-(P(R')₂)-2-(CO₂M)phenyl, (Rₓ)(XCH₂)P(OR)_{y} and (Rₓ)(R)P(CH₂)_{y}C(O)NA₂, wherein R (independently in each occurrence) represents a monovalent organo group, R' (independently in each occurrence) represents a monovalent hydrocarbyl group, X is carboxymethyl or carboxyethyl, A is hydrogen or a monovalent organo group, M is an alkali metal, (preferably sodium or potassium), and x and y (independently) are each either 0, 1 or 2 and the sum of x and y is 2, with the proviso that when x is 2, the R groups may, together with the phosphorus atoms, form a mono or bicyclic heterocyclic phosphine having from 5 to 7 carbon atoms in each ring thereof. Particularly preferred complexes are those described in US 3,676,523 in which the ligand is an o-dihydrocarbylphosphinobenzoic acid or its alkali metal salt and most preferably p-diphenylphosphinobenzoic acid. In other preferred complexes as described in US 3,825,615 the ligand is dicyclohexylphosphinopropionic acid or its alkali metal salt.

Optimized results with regard to activity, efficiency and selectivity can be obtained by using the zirconium carboxylate catalyst at a concentration in the range from about 0.005 to 0.2 g/l, preferably at a temperature in the range from about 60 to 150°C, in particular from about 70° to 111°C, and most preferred from about 60 to 100°C, and at an ethylene pressure of about 1 to 7, preferably of about 2 to 5 MPa. Good results are regularly obtained when employing a pressure of about 2MPa.

The process according to the invention is regularly conducted in solution in an inert solvent, i.e. a solvent which does not react with the catalyst system. Suitable solvents comprise aromatic hydrocarbons and halogenated derivatives thereof such as benzene, toluene, xylene, chlorobenzene, ethylbenzene, dichlorobenzene, chlorotoluene or tetrahydronaphthalene. Also, aliphatic hydrocarbons and halogenated derivatives thereof can be employed such as pentane, hexane, heptane, octane, nonane, decane, cyclohexane, decaline, dichloroethene, dichlorobutene, iso-octane, methylcyclohexane, methylchloride, ethylchloride. Mixtures of the aforementioned solvents may as well be used. Also, mixtures of aromatic and aliphatic solvents can be used. Among the aforementioned solvents benzene, toluene, xylene and chlorobenzene are preferred, toluene being particularly preferred. Solvents being particular preferred such as benzene or toluene are capable of diluting the oligomer formed thereby ensuring the homogeneity of the reaction mixture and also a moderate viscosity even at the outlet line.

Ethylene as well as the solvent is preferably employed having a very high purity and being in particular essentially free of any substantial water traces.

It is also preferred that the preparation of the catalyst is carried out under an atmosphere of an inert gas such as nitrogen.

Ethylene can be used as such or can be employed in admixture with an inert gas such as nitrogen or argon.

The reaction temperature in the reaction vessels is usually from about 50 to 200°C, preferably from about 70 to 150°C, and most preferred from about 60 to 100°C.

The reaction pressure usually is in the range from about 0.2 MPa to 50 MPa, preferably from about 2 to 30 MPa.

According to one aspect of the present invention the process for the preparation of linear α-olefin oligomers is conducted with at least one cascade which comprises at least 4 reaction vessels which are connected in series. The initial reaction vessel of a cascade of reaction vessels is referred to as first reaction vessel whereas the last reaction vessel of such a cascade is referred to as third reaction vessel. All intermediate reaction vessels of the cascade of vessels which are connected in series are referred to as second reaction vessels in the meaning of the present invention.

According to a preferred embodiment of the process of the present invention after process step e) in another process step (e')) at least part, in particular all, of the content of the second reaction vessel is transferred to another subsequent second reaction vessel in the cascade, in particular via a second pipe system, in which ethylene is already present and/or to which ethylene is simultaneously and/or subsequently added, whereafter the aforementioned step e' ) is either repeated and/or steps f) to h) are conducted.

In one embodiment it is also possible to transfer the reaction mixture of a second reactor vessel to one of the preceding, in particular emptied, reactor vessels in the series in which ethylene is already present and/or to which ethylene is simultaneously and/or subsequently added.

According to one aspect of the process according to the invention the catalyst, co-catalyst and/or solvent is/are added only to the first reaction vessel, no additional catalyst, co-catalyst and/or solvent being added to any second or third reaction vessel. According to another embodiment of said process it is also possible that at least one catalyst and/or at least co-catalyst is/are also added to at least one second and/or third reaction vessel.

Preferably, ethylene left unreacted is recovered from at least one reaction vessel.

Improved results in terms of yield and degree of linearity usually are obtained when, if the catalyst is added not only to the first reaction vessel, but also to at least one additional reaction vessel, the catalyst concentration is adjusted so that the first reaction vessel exhibits the highest catalyst concentration.

Beneficial results are also obtained when, if the co-catalyst is added not only to the first reaction vessel, but also to the third and/or at least one second reaction vessel, the co-catalyst concentration is adjusted so that the last reaction vessel in the cascade which contains the co-catalyst, in particular the third reaction vessel, exhibits the highest co-catalyst concentration.

Preferably, with all reaction vessels the oligomerization temperature can be adjusted. It has been found that is particularly preferred when the average reaction temperature of at least two reaction vessels, in particular of all reaction vessels, is not identical. In particular, the reaction temperature is increased in every consecutive reaction vessel.

In another aspect of the process according to the invention at least two cascades of reaction vessels, which are in itself connected in series, are connected in parallel.

With the process of the present invention it has been found that is sufficient to keep the reaction mixture in an individual reactor vessel of the reactor cascade for not more than 60 min, e.g. for about 5 to 60 minutes and in particular for about 15 to 45 minutes, before being transferred to the next reactor vessel in the series or before being transported via the outlet line.

It has been surprisingly found that with the process of the present invention the reaction temperature can be easily controlled, that essentially no higher molecular polyethylene products such as polyethylene wax is formed, that the oligomers obtained exhibit a very high degree of linearity than that essentially no reactor fouling occurs. Accordingly, a very high product quality can be reliably guaranteed with the process of the present invention. Essentially, any kind of side reactions can be avoided. Another achievement of the present invention is to substantially reduce the residence time of the reaction mixture in a reactor vessel thereby reducing the risk of plugging of the reactor sections. Further, with the present invention a high flow velocity can be maintained also up to the outlet line thereby preventing the possible settling of the oligomer during transportation. As plugging in the pipes or at the reaction zone can be substantially reduced also the maintenance work and plant shut down time is reduced. In general, with the process of the present invention the reactor space time yield and the catalyst productivity is highly improved resulting in better quality and reduced plant costs.

By adjusting the number of reaction vessels in a cascade linear α-olefin oligomers of a rather limited molecular weight range can be synthesized.

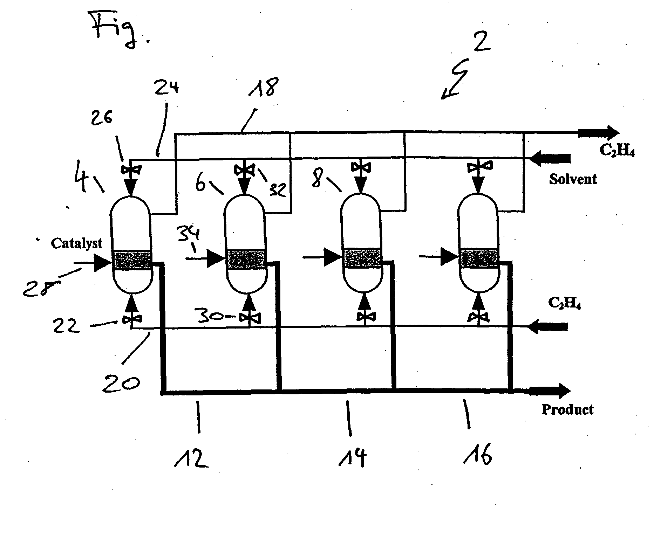

A more complete understanding of the invention and of the indented advantages thereof will be readily understood by reference to the following detailed description of an example of a process of the invention when considered in connection with the accompanying drawing wherein a schematical representation of a cascade of reaction vessels which are connected in series is depicted.

The solvent, in particular toluene, together with the catalyst system consisting of a zirconium catalyst and an alkyl aluminum halide as co-catalyst are introduced into the first reaction vessel 4 of the cascade 2, which is a bubble column reactor. The reaction vessel 4 has been dried and kept under the atmosphere of an inert gas before being charged with the catalyst system and the solvent. The solvent can be introduced via a separate conduit 24, controlled by a valve 26. Also, the catalyst system can be separately introduced via a discharge unit 28. Then, purified ethylene gas is introduced into the bubble column reactor 4 via a conduit 20, controlled by a valve 22, and is purged through the liquid system. The ethylene pressure in the first reaction vessel 4 is about 2 MPa bar. The temperature is kept at about 100 °C. After about 20 minutes the content of the first reaction vessel 4 is completely transferred via a first pipe system 12 into a second reaction vessel 6 which also is a bubble column reactor, no additional solvent, catalyst and/or co-catalyst being added, thus, valves 30 and 32 and discharge unit 34 being closed. As with the first reaction vessel 4 also with the second reaction vessel 6 purified ethylene is purged through its liquid content. The oligomerization is conducted for around 20 minutes in the second reaction vessel 6 before its content is transferred via a second pipe system 14 to a subsequent second reaction vessel 8. Again, purified ethylene is purged through the bubble column reactor 8 for a period of about 20 minutes at a temperature of about 100 °C. In a next step, the content is transferred via a third pipe system 16 to a third reaction vessel 10 which is the last reaction vessel of the cascade 2 of reactors which are connected in series. After the oligomerization has been completed in the third reaction vessel the oligomeric linear α-olefins are isolated by conventional methods known to a person skilled in the art. Excess ethylene gas which has been left unreacted can be recovered from each reaction vessel via a recovery pipe system 18 and be used for further oligomerization reactions.

By applying a process according to the present invention especially in comparison with a continuous stirred tank reactor the productivity can be greatly improved. Also, especially the risk of fouling in the first reactor in the cascade can be substantially lowered as it is possible to lower the product concentration and the residence time per reactor. In addition, less fouling allows higher liquid velocities in the cascade. Furthermore, the pipe system which connects consecutive reaction vessels is less prone to blockage.

With the process according to the present invention making use of a cascade of reaction vessels being connected in series it is possible to operate each reactor at a different temperature thereby allowing, for example, to adjust the ethylene consumption and the feed flow rate. By increasing the temperature of each a consecutive reaction vessels in the cascade essentially identical ethylene consumption and feed flow rates as well as a similar conversion per reactor can be achieved. Alternatively, by decreasing the temperature in consecutive reaction vessels the formation of higher oligomers can be decreased.

Obviously, numerous modifications and variations of the present invention are possible in the light of the above teaching. It is therefore to be understood that within the scope of the attached claims, the invention may by practiced otherwise than as specifically described herein.

### Reference list

- 2: cascade of reaction vessels connected in series
- 4: first reaction vessel
- 6: second reaction vessel
- 8: second reaction vessel
- 10: third reaction vessel
- 12: first pipe system
- 14: second pipe system
- 16: third pipe system
- 18: recovery pipe system
- 20: conduit for ethylene gas
- 22: valve
- 24: conduit for solvent
- 26: valve
- 28: discharge unit for catalyst system
- 30: valve
- 32: valve
- 34: discharge unit

## Claims

1. Process for the preparation of linear α-olefin oligomers comprising the following steps:
a) providing at least one cascade of reaction vessels which comprises at least two reaction vessels connected in series,
b) adding at least one solvent, at least one, in particular homogeneous, catalyst, if need be at least one, in particular homogeneous, co-catalyst, and ethylene to an initial, first reaction vessel,
c) conducting an oligomerization reaction in the first reaction vessel for a first period of time sufficient to start α-olefin oligomer formation,
d) transferring at least a part, in particular all, of the content of the first reaction vessel to a subsequent, second reaction vessel in the cascade, in particular by use of a first pipe system, in which ethylene is already present and/or to which ethylene is simultaneously and/or subsequently added,
e) conducting the oligomerization reaction in the second reaction vessel for a second period of time sufficient to continue α-olefin oligomer formation,
f) transferring at least a part, in particular all, of the content of the second reaction vessel to a last, third reaction vessel in the cascade, in particular via a third pipe system, in which ethylene is already present and/or to which ethylene is simultaneously and/or subsequently added,
g) conducting the oligomerization reaction in the third reaction vessel for a third period of time sufficient to continue and terminate α-olefin oligomer formation, and
h) isolating linear α-olefin oligomers from the third reaction vessel.

2. Process according to claim 1 wherein
at least two cascades of reaction vessels, which are in itself connected in series, are connected in parallel.

3. Process according to claim 1 or 2 wherein
at least one cascade comprises at least 4 reaction vessels which are connected in series.

4. Process according to claim 3 wherein
after process step e) in another process step (e')) at least part, in particular all, of the content of the second reaction vessel is transferred to another subsequent second reaction vessel in the cascade, in particular via a second pipe system, in which ethylene is already present and/or to which ethylene is simultaneously and/or subsequently added, whereafter the aforementioned step e') is either repeated and/or steps f) to h) are conducted.

5. Process according to anyone of the preceding claims wherein
at least one catalyst and/or at least co-catalyst is/are also added to at least one second and/or third reaction vessel.

6. Process according to anyone of the preceding claims wherein
any ethylene left unreacted is recovered from at least one reaction vessel.

7. Process according to anyone of the preceding claims wherein
if the catalyst is added not only to the first reaction vessel, but also to at least one additional reaction vessel, the catalyst concentration is adjusted so that the first reaction vessel exhibits the highest catalyst concentration.

8. Process according to any one of the preceding claims wherein
if the co-catalyst is added not only to the first reaction vessel, but also to the third and/or at least one second reaction vessel, the co-catalyst concentration is adjusted so that the last reaction vessel in the cascade which contains the co-catalyst, in particular the third reaction vessel, exhibits the highest co-catalyst concentration.

9. Process according to any one of the preceding claims wherein
the average reaction temperature of at least two reaction vessels, in particular of all reaction vessels, is not identical.

10. Process according to one of the preceding claims wherein
the reaction temperature in at least one reaction vessel is from about 50 to 200°C, preferably from about 70 to 150°C.

11. Process according to one of the preceding claims wherein
the reaction pressure in at least one reactor vessel is in the range from about 0.2 to 50 MPa, preferably from about 2 to 30 MPa.

12. Process according to one of the preceding claims wherein
the solvent in at least one reactor vessel comprises benzene, toluene, xylene, chlorobenzene or a mixture thereof.

13. Process according to one of the preceding claims wherein
the reaction mixture is kept in at least one, in particular all, individual reactor vessels for no more than 60 minutes.

14. Process according to one of the preceding claims wherein
the α-olefin oligomers obtained have a molecular weight M_{w} in the range from 10² to 10⁴ g/mol.
